# EUROPÄISCHE PATENTSCHRIFT

(11) **EP 2 177 476 B1**
(45) Veröffentlichungstag und Bekanntmachung des Hinweises auf die Patenterteilung: **23.01.2013**
(21) Anmeldenummer: 09012498.3
(22) Anmeldetag: 02.10.2009
(51) Int. Cl.: C01B 7/07

(54) **Verfahren zur Abtrennung von Kohlenmonoxid aus einem HCI-Rohgas**
Method for separating carbon monoxide from a HCl raw gas
Procédé de séparation d'oxyde de carbone à partir d'un gaz brut HCl

(30) Priorität: 15.10.2008 DE 102008051694
(43) Veröffentlichungstag der Anmeldung: 21.04.2010
(73) Patentinhaber: Bayer MaterialScience AG, 51368 Leverkusen (DE)
(72) Erfinder: Soppe, Alfred, 201507 Shanghai (CN); Knud, Werner, 47800 Krefeld (DE)

(56) Entgegenhaltungen:
- JP-A- 62 270 404
- US-A- 4 935 220
- US-A1- 2003 196 764

## Beschreibung

Die Erfindung geht aus von bekannten Verfahren zur Oxidation von Chlorwasserstoff mittels Sauerstoff unter thermisch katalytischen Bedingungen und der dazu notwendigen Reinigung der Eduktgase vor dem Kontakt mit dem Oxidationskatalysator.

Eine Vielzahl von chemischen Verfahren zur Umsetzung mit Chlor oder Phosgen, wie die Herstellung von Isocyanaten oder Chlorierungen von Aromaten, führen zu einem Zwangsanfall an Chlorwasserstoff. In der Regel wird dieser Chlorwasserstoff durch Elektrolyse wieder in Chlor umgewandelt. Gegenüber dieser sehr energieaufwändigen Methode bietet die direkte Oxidation von Chlorwasserstoff mit reinem Sauerstoff oder einem sauerstoffhaltigen Gas an heterogenen Katalysatoren (der sogenannte Deacon-Prozess) gemäß

4 HCl + O₂ ⇒ 2 Cl₂ + 2 H₂O

deutliche Vorteile hinsichtlich des Energieverbrauchs.

Bei Prozessschritten zur Herstellung von Isocyanaten wie der Phosgenierung, kann eine größere Menge Kohlenmonoxid (CO) als Verunreinigung im HCl-Abgas enthalten sein. Typischerweise enthält Chlorwasserstoffgas, das z.B. aus einer Phosgenierungsreaktion herrührt, Kohlenmonoxid. So wird in EP 0 233 773 beschrieben, dass ein solches Gas bis zu 10 Vol.-% Kohlenmonoxid aufweisen kann. In der allgemein verbreiteten Flüssigphasen-Phosgenierung wird im HCl Abgas der Phosgenauswaschkolonne in der Regel ein CO-Gehalt im Bereich von 0,1-3 Vol-% gefunden. Bei der zukunftsweisenden Gasphasen Phosgenierung (DE 42 17 019 A1, DE 103 07 141 A1) sind auch höhere CO-Mengen (3 bis mehr als 5% ) zu erwarten, da bei diesem Verfahren bevorzugt keine Kondensation von Phosgen, und eine damit verbundene Abtrennung des Kohlenmonoxids, vor der Phosgenierung durchgeführt wird.

Bei der konventionellen katalytischen HCl Oxidation mit Sauerstoff bedient man sich verschiedenster Katalysatoren z.B. auf Basis von Ruthenium, Chrom, Kupfer, etc. Solche Katalysatoren sind beispielsweise in DE 1 567 788 A1, EP 251 731 A2, EP 936 184 A2, EP 761 593 A1, EP 711 599 A1 und DE 102 50 131 A1 beschrieben. Diese können allerdings gleichzeitig als Oxidationskatalysatoren für eventuell vorhandene Nebenkomponenten wie Kohlenmonoxid oder organische Verbindungen fungieren. Die katalytische Kohlenmonoxidoxidation zu Kohlendioxid ist jedoch äußerst exotherm und verursacht unkontrollierte lokale Temperaturerhöhungen an der Oberfläche des heterogenen Katalysators (Hot-Spot) in der Art, dass eine Deaktivierung stattfinden kann. In der Tat würde die Oxidation von 5% Kohlenmonoxid in einem Sauerstoff enthaltenden inerten Gas (z.B. N₂) bei einer Eintrittstemperatur von 250°C (Betriebstemperaturen Deacon 200 - 450°C) eine Temperaturerhöhung von weit über 200 K bei einer adiabatischen Umsetzung verursachen. Eine Ursache für die Katalysatordeaktivierung liegt in der mikrostrukturellen Veränderung der Katalysatoroberfläche, z.B. durch Sinterprozesse, aufgrund der Hot-Spot-Bildung.

Weiterhin ist die Adsorption von Kohlenmonoxid an der Oberfläche des Katalysators nicht auszuschließen. Die Bildung von Metallcarbonylen kann reversibel oder irreversibel erfolgen und somit in direkter Konkurrenz zur HCl-Oxidation stehen. In der Tat kann Kohlenmonoxid mit einigen Elementen auch bei hohen Temperaturen sehr stabile Bindungen eingehen und somit eine Inhibierung der gewünschten Zielreaktion verursachen. Ein weiterer Nachteil könnte durch die Flüchtigkeit dieser Metallcarbonyle entstehen, wodurch nicht unerhebliche Mengen an Katalysator verloren gehen und zusätzlich je nach Anwendung einen aufwändigen Aufreinigungsschritt benötigen.

Auch beim Deacon Verfahren kann eine Katalysatordeaktivierung sowohl durch Zerstörung des Katalysators als auch durch Einschränkung der Stabilität verursacht werden. Eine Konkurrenz zwischen Chlorwasserstoff und Kohlenmonoxid kann auch zu einer Inhibierung der gewünschten HCl-Oxidationsreaktion führen.

Die Oxidation von Chlorwasserstoffgas mit Sauerstoff ist exotherm, so dass ohne Kühlung die Temperatur während der Reaktion ansteigt. Dies kann z.B. im Falle einer katalysatorgestützten Oxidationsreaktion zur Schädigung des Katalysators durch thermische Beanspruchung führen. Der Temperaturanstieg kann aber auch die eingesetzten Reaktorwerkstoffe schädigen. Um dies zu verhindern, kann der Reaktionsraum gekühlt oder der Temperaturanstieg durch Regelung der zugeführten Chlorwasserstoff-Menge begrenzt werden.

In beiden Fällen ist eine parallel ablaufende exotherme Reaktion wie die Oxidation von Kohlenmonoxid zu Kohlendioxid unerwünscht, da sie entweder die benötigte Kühlleistung erhöht oder die Menge an zu oxidierendem Chlorwasserstoff reduziert werden muss. Bei Einsatz eines Ruthenium-basierten Katalysators muss auch damit gerechnet werden, dass das Kohlenmonoxid mit Ruthenium flüchtige Carbonylverbindungen bildet und so die katalytisch aktive Komponente ausgetragen wird.

Für ein optimales Betreiben des Deacon-Verfahrens ist demnach ein möglichst geringer Gehalt an Kohlenmonoxid im HCl-Gas notwendig, um eine lange Lebensdauer des eingesetzten Katalysators zu gewährleisten.

Das Problem der parallel ablaufenden Oxidation von Kohlenmonoxid bei der Chlorwasserstoff$-Oxidation ist schon in EP 0 233 773 A1 bzw. in JP 62-270404 A behandelt worden. Dort wird zur Lösung des Problems eine Vorreaktion des im Chlorwasserstoffgas enthaltenen Kohlenmonoxids mit Sauerstoff zu Kohlendioxid an einem Palladium haltigen Katalysator vorgeschlagen. Diese Lösung hat allerdings den Nachteil, dass ein relativ teurer Oxidationskatalysator in einem besonderen Vorreaktor bereitgestellt und eingesetzt werden muss.

In der Anmeldungsschrift JP 2003-171103 A wird erwähnt, dass bei einem hohen Gehalt an Chlorwasserstoff der Palladium-Katalysator keine ausreichend hohe Aktivität besitzt, um das Kohlenmonoxid im HCl-Gas zu oxidieren. Als Alternative wird dort ein Katalysator auf Rutheniumbasis genannt. Dieser hat aber, genauso wie der Palladium-Katalysator, den Nachteil eines relativ hohen Preises.

Die Aufgabe dieser Erfindung ist es somit, ein effektives und einfacheres Verfahren zur Reinigung eines Chlorwasserstoffrohgasstromes bereitzustellen.

Gegenstand der Erfindung ist ein Verfahren zur Abtrennung von Kohlenmonoxid enthaltenden Gasen, insbesondere Kohlenmonoxid enthaltendem Stickstoffgas aus einem mindestens Kohlenmonoxid und gegebenenfalls Stickstoff enthaltenden HCl-Rohgas, das in einem HCl-Oxidationsprozess einsetzbar ist, bestehend mindestens aus den Prozessschritten:
a) Kompression des HCl-Rohgases in einer Kompressionsstufe auf einen erhöhten Druck;
b) Abkühlung des komprimierten HCl-Rohgases, sodass Chlorwasserstoff verflüssigt und das Kohlenmonoxid enthaltende Gas zurückbleibt;
c) Abtrennung dieses Kohlenmonoxid enthaltenden Gases von dem verflüssigten Chlorwasserstoff;
d) Verdampfung und gegebenenfalls Überhitzung des flüssigen Chlorwasserstoffs und Bereitstellung als gereinigtes HCl-Gas für den HCl-Oxidationsprozess.

Im Gegensatz zu den aus dem Stand der Technik bekannten Verfahren wird das Kohlenmonoxid im erfindungsgemäßen Verfahren nicht durch eine Oxidationsreaktion aus dem Chlorwasserstoffgas entfernt. Die Abtrennung von Kohlenmonoxid erfolgt vielmehr schon im HCl-Rohgas, bevor es in den Deacon-Prozess geleitet wird. Dazu wird das Gas zunächst komprimiert und abgekühlt. Dabei verflüssigt die HCl, das Kohlenmonoxid bleibt jedoch gasförmig. Nach Abzug des gasförmigen Kohlenmonoxids bleibt flüssige, gereinigte HCl zurück. Die flüssige, gereinigte HCl wird anschließend verdampft und in den Deacon-Prozess geführt.

Die Verflüssigung des HCl-Rohgases wird in einer bevorzugten Ausführung des Verfahrens durch die Verdampfung des flüssigen, gereinigten Chlorwasserstoffs bewerkstelligt, indem beide Ströme auf die beiden Seiten eines als Rekuperator betriebenen Wärmeübertragers geleitet werden. Die flüssige, gereinigte HCl wird entspannt und verdampft dann auf der einen Seite des Rekuperators bei einer Temperatur, die niedriger als die Kondensationstemperatur des HCl-Rohgases auf der anderen Seite des Rekuperators ist.

Bevorzugt ist eine Ausführung des neuen Verfahrens, bei der die Abkühlung gemäß Schritt b) in zwei oder mehr Stufen, bevorzugt in zwei, drei oder vier Stufen, besonders bevorzugt in drei Stufen erfolgt

Eine andere bevorzugte Ausführung des neuen Verfahrens ist **dadurch gekennzeichnet, dass** die nach Schritt d) zur Verdampfung und gegebenfalls anschließenden Überhitzung der flüssigen HCl benötigte Wärme durch die bei der Abkühlung und zumindest teilweise Verflüssigung des komprimierten HCl-Rohgases gemäß Schritt b) erhaltene Wärme bereitgestellt wird.

Besonders bevorzugt wird die gemäß Schritt b) erhaltbare Wärmeenergie aus der ersten und/oder der zweiten Stufe der Abkühlung gemäß Schritt b) entnommen. Die Kompression a) wird insbesondere bei einem Druck von bis zu 30 bar (30000 hPa), bevorzugt von bis zu 20 bar (20000 hPa), besonders bevorzugt von bis zu 15 bar (15000 hPa) durchgeführt.

Die Abkühlung gemäß Schritt b) wird insbesondere bis zu einer Temperatur von -80 °C und höher, bevorzugt von -70 °C und höher, besonders bevorzugt von -60 °C und höher durchgeführt.

Die Verdampfung gemäß Schritt d) wird insbesondere bei einer Temperatur von -45 °C und höher, bevorzugt von -20 °C und höher, besonders bevorzugt von -10 °C und höher durchgeführt.

In einer bevorzugten Variante des neuen Verfahrens enthält der HCl-Rohgasstrom in Schritt a) Stickstoff und/oder andere Inertgase, z.B. Edelgase und/oder andere unter den Verfahrensbedingungen nicht kondensierbare Gase, und diese Gase werden mit der Abtrennung dieses Kohlenmonoxid enthaltenden Gases von dem verflüssigten Chlorwasserstoff in Schritt c) abgetrennt.

Eine andere bevorzugte Ausführung des neuen Verfahrens ist **dadurch gekennzeichnet, dass** die Abkühlung gemäß Schritt b) in zwei oder mehr Stufen erfolgt und vor der Verflüssigung des Chlorwasserstoffs kondensierbare organische Nebenbestandteile, insbesondere Ortho-Dichlorbenzol oder Monochlorbenzol auskondensiert bzw. ausgefroren und vom HCl-Rohgasstrom abgetrennt werden.

Bevorzugt erfolgt die Wärmeübertragung in Schritt b) in einem Rekuperator.

Eine besonders bevorzugte Variante des neuen Verfahrens ist **dadurch gekennzeichnet, dass** die Wärmeübertragung in Schritt b) in einem ersten Rekuperator erfolgt, in dem gleichzeitig das gereinigte HCl-Gas überhitzt wird und sich daran ein zweiter Rekuperator anschließt, in dem die Verflüssigung des HCl-Rohgases gleichzeitig mit der Verdampfung des gereinigten HCl-Gases geschieht, gefolgt von einem Nachkondensator, in dem das nach Verflüssigung des HCl-Rohgases verbleibende Restgas weiter von HCl durch Kondensation befreit wird.

Gegenstand der Erfindung ist auch ein Verfahren zur Herstellung von Chlor aus einem Chlorwasserstoff und Kohlenmonoxid enthaltenden Rohgas, das die Schritte umfasst:
A) Abtrennung von Kohlenmonoxid enthaltenden Gasen, insbesondere Kohlenmonoxid enthaltendem Stickstoffgas aus einem mindestens Kohlenmonoxid und gegebenenfalls Stickstoff enthaltenden HCl-Rohgas nach dem oben beschriebenen erfindungsgemäßen Trennverfahren, und
B) Katalytische Oxidation des Chlorwasserstoffs in dem aus Schritt a) resultierenden Chlorwasserstoff enthaltenden Gas mit Sauerstoff unter Bildung von Chlor.

Bevorzugt wird die Oxidation in Schritt B) mit reinem Sauerstoff, sauerstoffangereicherter Luft oder Luft betrieben.

Der Gehalt an Chlorwasserstoff in dem in den Schritt a) der Abtrennung A) eintretenden Chlorwasserstoff und Kohlenmonoxid enthaltenden HCl-Rohgas liegt bevorzugt im Bereich von 20 bis 99,5 Vol.-%.

Der Gehalt an Kohlenmonoxid in dem in Schritt a) der Abtrennung A) eintretenden Chlorwasserstoff und Kohlenmonoxid enthaltenden HCl-Rohgas liegt bevorzugt im Bereich von 0,1 bis 15 Vol.-%, besonders bevorzugt im Bereich von 0,5 bis 15 Vol.-%.

Der Gehalt an Kohlenmonoxid wird in einer bevorzugten Ausführung des Verfahrens in der Abtrennung A) auf 1 Vol.-% und weniger, vorzugsweise auf weniger als 0,5 Vol.-%, noch bevorzugter auf weniger als 0,1 Vol.-% verringert.

Bevorzugt ist weiterhin ein Herstellungsverfahren für Chlor, worin in Schritt B) mindestens ein gegebenenfalls geträgerter Katalysator verwendet wird, der mindestens ein Element aus der Gruppe enthält, die besteht aus: Ruthenium (beispielsweise als Rutheniumoxid, Rutheniumchlorid oder andere Rutheniumverbindungen), Gold, Palladium, Platin, Osmium, Iridium, Silber, Kupfer, Kalium, Rhenium, Chrom.

Der Träger des Katalysators in Schritt B) wird in einer bevorzugten Form aus der Gruppe ausgewählt, die besteht aus: Zinndioxid, Titandioxid, Aluminiumoxid, Siliziumoxid, Aluminium-Silizium Mischoxide, Zeolithe, Oxide und Mischoxide (z.B. von Titan, Zirkon, Vanadium, Aluminium, Silizium, etc.), Metallsulfate, Ton etc., bevorzugt Zinndioxid.

Bevorzugt wird das neue Verfahren mit dem als Deacon-Prozess bekannten katalytischen Gasphasenoxidationsverfahren kombiniert. Hierbei wird Chlorwasserstoff mit Sauerstoff in einer exothermen Gleichgewichtsreaktion zu Chlor oxidiert, wobei Wasserdampf anfällt. Die Reaktionstemperatur beträgt üblicherweise 150 bis 500°C, der übliche Reaktionsdruck beträgt 1 bis 25 bar. Da es sich um eine Gleichgewichtsreaktion handelt, ist es zweckmäßig, bei möglichst niedrigen Temperaturen zu arbeiten, bei denen der Katalysator noch eine ausreichende Aktivität aufweist. Ferner ist es zweckmäßig, Sauerstoff in überstöchiometrischen Mengen zum Chlorwasserstoff einzusetzen. Üblich ist beispielsweise ein zwei- bis vierfacher Sauerstoff-Überschuss. Da keine Selektivitätsverluste zu befürchten sind, kann es wirtschaftlich vorteilhaft sein, bei relativ hohem Druck und dementsprechend bei gegenüber Normaldruck längerer Verweilzeit zu arbeiten.

Geeignete bevorzugte Katalysatoren für das Deacon-Verfahren enthalten Rutheniumoxid, Rutheniumchlorid, Rutheniumoxidchlorid oder andere Rutheniumverbindungen auf Siliziumdioxid, Aluminiumoxid, Titandioxid, Zinndioxid oder Zirkondioxid als Träger. Geeignete Katalysatoren können beispielsweise durch Aufbringen von Rutheniumchlorid auf den Träger und anschließendes Trocknen oder Trocknen und Calcinieren erhalten werden. Geeignete Katalysatoren können ergänzend zu oder an Stelle einer Rutheniumverbindung auch Verbindungen anderer Edelmetalle, beispielsweise Gold, Palladium, Platin, Osmium, Iridium, Silber, Kupfer oder Rhenium enthalten. Geeignete Katalysatoren können ferner Chrom(III)oxid enthalten.

Die katalytische Chlorwasserstoff-Oxidation kann adiabatisch oder isotherm oder annähernd isotherm, bevorzugt aber adiabatisch, diskontinuierlich oder kontinuierlich, bevorzugt aber kontinuierlich als Fließ- oder Festbettverfahren, bevorzugt als Festbettverfahren in Rohrbündelreaktoren oder Schüttbetten, besonders bevorzugt in Schüttbetten, an Heterogenkatalysatoren bei einer Reaktortemperatur von 180 bis 500°C, bevorzugt 200 bis 400°C, besonders bevorzugt 220 bis 350°C und einem Druck von 1 bis 25 bar (1000 bis 25000 hPa), bevorzugt 1,2 bis 20 bar, besonders bevorzugt 1,5 bis 17 bar und insbesondere 2,0 bis 15 bar durchgeführt werden.

Übliche Reaktionsapparate, in denen die katalytische Chlorwasserstoff-Oxidation durchgeführt wird, sind Festbett- oder Wirbelbettreaktoren. Die katalytische Chlorwasserstoff- Oxidation kann bevorzugt auch mehrstufig durchgeführt werden.

Der Umsatz an Chlorwasserstoff im einfachen Durchgang kann bevorzugt auf 15 bis 90 %, bevorzugt 40 bis 90%, besonders bevorzugt 50 bis 90% begrenzt werden. Nicht umgesetzter Chlorwasserstoff kann nach Abtrennung teilweise oder vollständig in die katalytische Chlorwasserstoff-Oxidation zurückgeführt werden. Das Volumenverhältnis von Chlorwasserstoff zu Sauerstoff am Reaktoreintritt beträgt bevorzugt 1:2 bis 20:1, bevorzugt 1:2 bis 8:1, besonders bevorzugt 1:2 bis 5:1.

Bei der adiabatischen oder annähernd adiabatischen Fahrweise können auch mehrere, insbesondere 2 bis 10, bevorzugt 4 bis 8, besonders bevorzugt 5 bis 7 in Reihe geschaltete Reaktoren mit Zwischenkühlung eingesetzt werden. Bei der isothermen oder annähernd isothermen Fahrweise können auch mehrere, also 2 bis 10, bevorzugt 2 bis 6, besonders bevorzugt 2 bis 5, insbesondere 2 bis 3, in Reihe geschaltete Reaktoren mit zusätzlicher Zwischenkühlung eingesetzt werden. Der Chlorwasserstoff kann entweder vollständig zusammen mit dem Sauerstoff vor dem ersten Reaktor oder über die verschiedenen Reaktoren verteilt zugegeben werden. Diese Reihenschaltung einzelner Reaktoren kann auch in einem Apparat zusammengeführt werden.

Eine weitere bevorzugte Ausführungsform einer für das Deacon-Verfahren geeigneten Vorrichtung besteht darin, dass man eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zinndioxid, Zirkondioxid oder deren Gemischen, Aluminiumoxid, Steatit, Keramik, Glas, Graphit, Edelstahl oder Nickelbasislegierungen eingesetzt werden. Beim bevorzugten Einsatz von Katalysatorformkörpern sollte das Inertmaterial bevorzugt ähnliche äußere Abmessungen haben.

Geeignete bevorzugte Katalysatoren für das Deacon-Verfahren enthalten Rutheniumoxide, Rutheniumchloride oder andere Rutheniumverbindungen. Als Trägermaterialen eignen sich beispielsweise Siliziumdioxid, Graphit, Titandioxid mit Rutil- oder Anatas-Struktur, Zinndioxid, Zirkondioxid, Aluminiumoxid oder deren Gemische, bevorzugt Titandioxid, Zinndioxid, Zirkondioxid, Aluminiumoxid oder deren Gemische, besonders bevorzugt Zinndioxid, γ- oder δ-Aluminiumoxid oder deren Gemische.

Geeignete Katalysatoren können beispielsweise durch Aufbringen von Ruthenium(III)chlorid auf den Träger und anschließendes Trocknen oder Trocknen und Calcinieren erhalten werden. Die Formgebung des Katalysators kann nach oder bevorzugt vor der Tränkung des Trägermaterials erfolgen. Geeignete Katalysatoren können ergänzend zu einer Rutheniumverbindung auch Verbindungen anderer Edelmetalle, beispielsweise Gold, Palladium, Platin, Osmium, Iridium, Silber, Kupfer, Chrom oder Rhenium enthalten.

Zur Dotierung der Katalysatoren eignen sich als Promotoren Metalle oder Metallverbindungen der Metalle: Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Als Katalysatorformkörper eignen sich Formkörper mit beliebigen Formen, bevorzugt sind Tabletten, Ringe, Zylinder, Sterne, Wagenräder oder Kugeln, besonders bevorzugt sind Ringe, Zylinder oder Sternstränge als Form. Die Formkörper können anschließend bei einer Temperatur von 100 bis 400°C, bevorzugt 100 bis 300°C beispielsweise unter einer Stickstoff-, Argon- oder Luftatmosphäre getrocknet und gegebenenfalls calciniert werden. Bevorzugt werden die Formkörper zunächst bei 100 bis 150°C getrocknet und anschließend bei 200 bis 400°C calciniert.

Die Reaktionswärme der katalytischen Chlorwasserstoff-Oxidation kann in vorteilhafter Weise zur Erzeugung von Hochdruck-Wasserdampf genutzt werden. Dieser kann zum Betrieb eines Phosgenierungsreaktors und/oder von Destillationskolonnen, insbesondere von Isocyanat-Destillationskolonnen genutzt werden.

In weiteren Schritten des Deacon-Verfahrens erfolgt eine ein- oder mehrstufige Abkühlung des nach der Oxidation erhaltenen Produktgases und die Abtrennung von nicht umgesetztem Chlorwasserstoff und Reaktionswasser aus dem Produktgas. Die Abtrennung des nicht umgesetzten Chlorwasserstoffs und des Reaktionswassers kann durch Auskondensieren von wässriger Salzsäure aus dem Produktgasstrom der Chlorwasserstoffoxidation durch Abkühlung erfolgen. Chlorwasserstoff kann auch in verdünnter Salzsäure oder Wasser absorbiert werden. Dies kann in einer oder mehreren Stufen erfolgen. Um den Chlorwasserstoff nahezu quantitativ aus dem Produktgas zu entfernen, ist es besonders vorteilhaft, Wasser in der letzten Stufe zuzugeben, um eine Gegenstromführung von Wasser und Produktgas zu erreichen. Gegebenenfalls kann nicht umgesetzter Chlorwasserstoff in die katalytische Chlorwasserstoff-Oxidation zurückgeführt werden. Anschließend erfolgt eine Trocknung des dann noch im Wesentlichen Chlor und Sauerstoff enthaltenden Produktgases, Abtrennung von Chlor aus dem Produktgas und Rückführung des danach verbleibenden, nicht umgesetzten Sauerstoffs in die Chlorwasserstoff-Oxidation.

Die folgenden Beispiele veranschaulichen die vorliegende Erfindung:

### Beispiele

### Beispiel 1

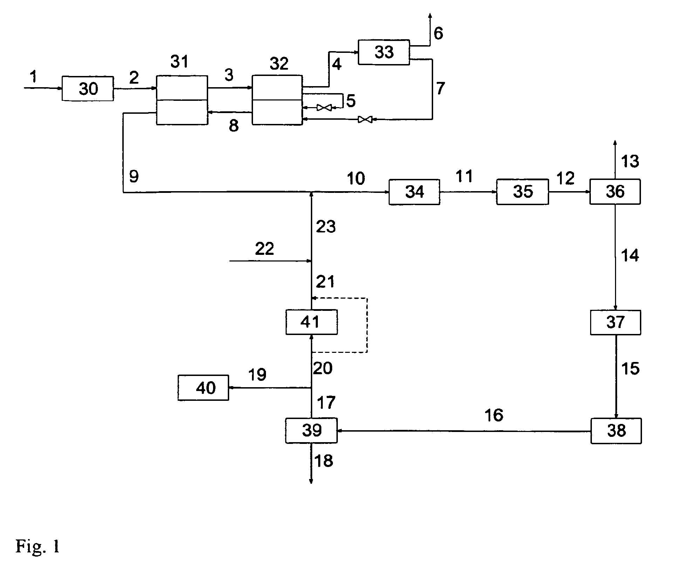

In diesem Beispiel wird der vorteilhafte Betrieb des erfmdungsgemäßen Prozesses unter Verwendung der Figur 1 beschrieben.

Ein HCl-Rohgasstrom 1 von 100 kg/h enthält 1,5 Vol.-% CO. Sein HCl-Antell beträgt damit ca. 99 Gew.-%. Der Strom 1 wird in einem Kompressor 30 auf einen Druck von 9 bar verdichtet.

Anschließend wird der komprimierte Rohgasstrom 2 in einem Wärmeübertrager 31 auf -10°C vorgekühlt, wobei noch keine Verflüssigung eintritt. Der gekühlte Strom 3 wird in den Rekuperator 32 geleitet und bei -38°C teilweise verflüssigt. Der nicht verflüssigte Anteil 4 enthält den Hauptanteil des CO sowie nicht verflüssigtes HCl-Gas. Strom 4 wird in den Nachkühler 33 geleitet und dort auf -60°C abgekühlt, so dass CO gasförmig zurückbleibt und als Strom 6 mit Resten von HCl-Gas vom Rohgasstrom 4 abgetrennt wird.

Enthält der HCl-Rohgasstrom weitere Komponenten, die unter den genannten Bedingungen nicht kondensieren, werden auch diese abgetrennt. Eine typische solche Komponente ist z.B. Stickstoff.

In den gereinigten, verflüssigten HCl-Strömen Strom 5 aus dem Rekuperator 32 und Strom 7 aus dem Nachkühler 33 sind jetzt nur noch kleine Reste von CO gelöst. Die Ströme 5 und 7 werden auf einen Druck von 6 bar entspannt. Durch die Absenkung des Drucks verdampft ein kleiner Teil der Flüssigkeitsströme, dabei sinkt ihre Temperatur unter die Kondensationstemperatur des gekühlten Stroms 3. Anschließend werden die entspannten Ströme auf die andere Seite des Rekuperators 32 aufgegeben und verdampfen weiter. Der dazu benötigte Wärmestrom wird durch die teilweise Verflüssigung des Stroms 3 geliefert.

Danach wird der gereinigte, weiter verdampfte HCl-Strom 8 durch die andere Seite des Wärmeübertragers 31 geleitet, wobei er vollständig verdampft und überhitzt wird. Gleichzeitig kühlt er dabei den komprimierten Rohgasstrom 2 vor. Der überhitzte, gereinigte HCl-Gasstrom 9 enthält jetzt im Wesentlichen HCl (98 kg/h), während sein CO-Gehalt durch die oben beschriebene Reinigungsprozedur auf Spuren reduziert wurde. Er wird mit einem Sauerstoff enthaltenden Rückstrom 23 von 95 kg/h zum Eduktstrom 10 vereinigt. Anschließend wird er im Wärmeübertrager 34 auf 290 °C erhitzt.

Der erhitzte Eduktstrom 11 wird in eine Reaktionszone 35 geleitet, in der in einer Kaskade von fünf adiabat betriebenen Reaktoren mit Zwischenkühlung 85% der zugeführten HCl an einem heterogenen Ru-Katalysator zu Cl₂ und H₂O umgesetzt werden. Gleichzeitig reagiert das noch in kleinen Resten vorhandene CO mit Sauerstoff zu CO₂. Da das Reaktionsgleichgewicht auf der Seite des Produkts CO₂ liegt, ist der CO-Umsatz nahezu quantitativ. Durch die Zwischenkühlung wird die Eintrittstemperatur für jeden Reaktor der Kaskade auf 290 °C gehalten. Durch geeignete Wahl der Katalysatormasse wird die Austrittstemperatur aus jedem Reaktor auf maximal 370 °C beschränkt. Die Einstellung der maximalen Austrittstemperatur erfolgt durch eine Regelung des zugeführten HCl-Gasstroms 9. Bei Überschreitung der maximalen Austrittstemperatur von 370 °C wird der HCl-Gasmengenstrom 9 verringert, bei Unterschreitung der Temperatur wird er erhöht.

Nicht umgesetzte HCl und der größte Teil des erzeugten Wassers werden in einem Abscheideprozess 36 als Salzsäure 13 vom Produktgas 12 abgetrennt. Anschließend könnte der Salzsäurestrom 13 noch mit Strom 6 in Kontakt gebracht werden, um die in Strom 6 enthaltenen Reste an HCl-Gas im Salzsäurestrom 13 aufzunehmen und so die HCl-Verluste zu minimieren (nicht gezeichnet). Alternativ ist für Strom 6 auch eine getrennte Absorption mit Wasser denkbar (ebenfalls nicht gezeichnet).

Der verbleibende Gasstrom 14 wird in der nächsten Stufe 37 mit Schwefelsäure in Kontakt gebracht und so getrocknet.

In einem Chlorkompressor 38 erfolgt eine Verdichtung des getrockneten Gasstroms 15 auf 12 bar.

In einer sich anschließenden Destillationskolonne 39 wird der getrocknete und komprimierte Gasstrom 16 von Komponenten wie O₂ und in der Reaktionszone gebildetem CO₂ (Strom 17) befreit. Das im Sumpf dieser Kolonne anfallende Chlor wird als Strom 18 flüssig abgezogen. Die abgetrennten Komponenten werden am Kopf der Kolonne gasförmig entnommen. Je nach den Reinheitsanforderungen an das Chlor kann es auch genügen, anstelle einer Destillation lediglich eine Kondensation durchzuführen (nicht gezeichnet). Dies ist apparativ weniger aufwändig, führt aber zu einem höheren O₂- und CO₂-Gehalt im flüssigen Chlor.

Hinter der Destillationskolonne 39 wird von Strom 17 ein Teilstrom 19 von 3 kg/h ausgeschleust. Dieser Teilstrom enthält noch ca. 13 Gew.-% Chlor und muss daher in eine Abgasbehandlung 40 geführt werden, um das Chlor zu entfernen.

Da das nach der Ausschleusung verbleibende Gas 20 in den Prozess zurückgeführt wird, sollte es erst von Komponenten befreit werden, die den Katalysator in der Reaktionszone 35 deaktivieren können. Dazu wird eine Gaswäsche 41 vorgesehen, aus der der gereinigte Gasstrom 21 austritt. Enthält das verbleibende Gas 20 keine den Katalysator deaktivierenden Komponenten, kann es auch an der Gaswäsche 41 vorbei geführt werden (gestrichelt gezeichnet).

Hinter der Gaswäsche 41 wird der gereinigte Gasstrom 21 mit 21 kg/h frischem Sauerstoff 22 als Ersatz für den im Prozess verbrauchten Sauerstoff vermischt. Der vermischte Strom wird dann wie oben beschrieben als Rückstrom 23 mit dem HCl-Gasstrom 9 vereinigt.

### Beispiel 2 (Vergleichsbeispiel)

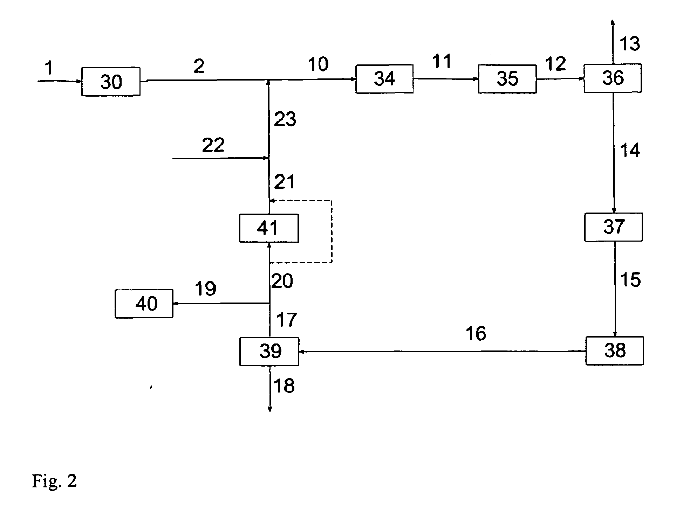

Im Vergleichsbeispiel wird anhand von Figur 2 eine Betriebsweise ohne HCl-Rohgasreinigung beschrieben und der wirtschaftliche Nachteil dieses Verfahrens aufgezeigt.

Ein HCl-Rohgasstrom 1, der 1,5 Vol.-% CO enthält, wird in einem Kompressor 30 auf einen Druck von 6 bar verdichtet.

Anschließend wird der komprimierte Rohgasstrom 2 mit einem Sauerstoff enthaltenden Rückstrom 23 von 95 kg/h zum Eduktstrom 10 vereinigt und im Wärmeübertrager 34 auf 290 °C erhitzt.

Der erhitzte Eduktstrom 11 wird in dieselbe Reaktionszone 35 geleitet, wie sie in Beispiel 1 schon beschrieben wurde: In einer Kaskade von fünf adiabat betriebenen Reaktoren mit Zwischenkühlung wird ein Teil der HCl an einem heterogenen Ru-Katalysator zu Cl₂ und H₂O umgesetzt. Gleichzeitig findet die Umsetzung des im HCl-Gas enthaltenen CO mit Sauerstoff zu CO₂ statt. Durch die Zwischenkühlung wird die Eintrittstemperatur für jeden Reaktor der Kaskade auf 290 °C gehalten. Die maximale Austrittstemperatur wird durch Regelung des HCl-Gasstroms 2 auf 370 °C gehalten. Da das Reaktionsgleichgewicht der gleichzeitig stattfindenden CO-Oxidation auf der Seite des Produkts CO₂ liegt, ist der CO-Umsatz nahezu quantitativ. Aufgrund der deutlich größeren Reaktionsenthalpie der CO-Oxidation muss der HCl-Gasstrom 2 reduziert werden, um die gewünschte maximale Austrittstemperatur von 370 °C in den Reaktoren halten zu können. Er sinkt dadurch auf 80 kg/h, was 80% des in Beispiel 1 genannten Werts entspricht. Damit erniedrigt sich die HCl-Oxidationskapazität des Prozesses entsprechend deutlich, was zu einem gravierenden wirtschaftlichen Nachteil führt.

Nicht umgesetzte HCl und der größte Teil des erzeugten Wassers werden in einem Abscheideprozess 36 als Salzsäure 13 vom Produktgas 12 abgetrennt.

Der verbleibende Gasstrom 14 wird in der nächsten Stufe 37 mit Schwefelsäure in Kontakt gebracht und so getrocknet.

In einem Chlorkompressor 38 erfolgt eine Verdichtung des getrockneten Gasstroms 15 auf 12 bar.

In einer sich anschließenden Destillationskolonne 39 wird der getrocknete und komprimierte Gasstrom 16 von Komponenten wie O₂ und in der Reaktionszone gebildetem CO₂ (Strom 17) befreit. Das im Sumpf dieser Kolonne anfallende Chlor 18 wird flüssig abgezogen. Die abgetrennten Komponenten werden am Kopf der Kolonne gasförmig entnommen. Je nach den Reinheitsanforderungen an das Chlor kann es auch hier genügen, anstelle einer Destillation lediglich eine Kondensation durchzuführen (nicht gezeichnet). Dies ist apparativ weniger aufwändig, führt aber zu einem höheren O₂- und CO₂-Gehalt im flüssigen Chlor.

Hinter der Destillationskolonne 39 wird von Strom 17 ein Teilstrom 19 von 3 kg/h ausgeschleust. Dieser Teilstrom enthält noch Chlor und muss daher in eine Abgasbehandlung 40 geführt werden, um das Chlor zu entfernen.

Da das nach der Ausschleusung verbleibende Gas 20 in den Prozess zurückgeführt wird, sollte es erst von Komponenten befreit werden, die den Katalysator in der Reaktionszone 35 deaktivieren können. Dazu wird eine Gaswäsche 41 vorgesehen, aus der der gereinigte Gasstrom 21 austritt. Enthält das verbleibende Gas 20 keine den Katalysator deaktivierenden Komponenten, kann es auch an der Gaswäsche 41 vorbei geführt werden (gestrichelt gezeichnet).

Hinter der Gaswäsche 41 wird der gereinigte Gasstrom 21 mit 17 kg/h frischem Sauerstoff 22 als Ersatz für den im Prozess verbrauchten Sauerstoff vermischt. Der vermischte Strom wird dann wie oben beschrieben als Rückstrom 23 mit dem HCl-Gasstrom 2 vereinigt.

## Patentansprüche

1. Verfahren zur Abtrennung von Kohlenmonoxid enthaltenden Gasen, insbesondere Kohlenmonoxid enthaltendem Stickstoffgas aus einem mindestens Kohlenmonoxid und gegebenenfalls Stickstoff enthaltenden HCl-Rohgas, das in einem HCl-Oxidationsprozess einsetzbar ist, bestehend mindestens aus den Prozessschritten:
a) Kompression des HCl-Rohgases in einer Kompressionsstufe auf einen erhöhten Druck;
b) Abkühlung des komprimierten HCl-Rohgases, so dass Chlorwasserstoff verflüssigt und das Kohlenmonoxid enthaltende Gas zurückbleibt;
c) Abtrennung dieses Kohlenmonoxid enthaltenden Gases von dem verflüssigten Chlorwasserstoff;
d) Verdampfung und gegebenenfalls Überhitzung des flüssigen Chlorwasserstoffs und Bereitstellung als gereinigtes HCl-Gas für den HCl-Oxidationsprozess.

2. Verfahren nach Anspruch 1, **dadurch gekennzeichnet, dass** die Abkühlung gemäß Schritt b) in zwei oder mehr Stufen, bevorzugt in zwei, drei oder vier Stufen, besonders bevorzugt in drei Stufen erfolgt.

3. Verfahren nach Anspruch 1 oder 2, **dadurch gekennzeichnet, dass** die nach Schritt d) zur Verdampfung und gegebenenfalls anschließenden Überhitzung der flüssigen HCl benötigte Wärme durch die bei der Abkühlung und zumindest teilweise Verflüssigung des komprimierten HCl-Rohgases gemäß Schritt b) erhaltene Wärme bereitgestellt wird.

4. Verfahren nach Anspruch 3, **dadurch gekennzeichnet, dass** die Abkühlung gemäß Schritt b) in zwei oder mehr Stufen, bevorzugt in zwei, drei oder vier Stufen, besonders bevorzugt in drei Stufen erfolgt und dass die gemäß Schritt b) erhaltbare Wärmeenergie aus der ersten und/oder der zweiten Stufe der Abkühlung gemäß Schritt b) entnommen wird.

5. Verfahren nach einem der Ansprüche 1 bis 4, **dadurch gekennzeichnet, dass** die Kompression a) bei einem Druck von bis zu 30 bar (30000 hPa), bevorzugt von bis zu 20 bar (20000 hPa), besonders bevorzugt von bis zu 15 bar (15000 hPa), durchgeführt wird.

6. Verfahren nach einem der Ansprüche 1 bis 5, **dadurch gekennzeichnet, dass** die Abkühlung gemäß Schritt b) bis zu einer Temperatur von -80 °C und höher, bevorzugt von -70 °C und höher, besonders bevorzugt von -60 °C und höher durchgeführt wird.

7. Verfahren nach einem der Ansprüche 1 bis 6, **dadurch gekennzeichnet, dass** die Verdampfung gemäß Schritt d) bei einer Temperatur von -45 °C und höher, bevorzugt von -20 °C und höher, besonders bevorzugt von -10°C und höher durchgeführt wird.

8. Verfahren nach einem der Ansprüche 1 bis 7, **dadurch gekennzeichnet, dass** der HCl-Rohgasstrom in Schritt a) Stickstoff und/oder andere Inertgase und/oder andere unter den Verfahrensbedingungen nicht kondensierbare Gase enthält, und diese mit der Abtrennung dieses Kohlenmonoxid enthaltenden Gases von dem verflüssigten Chlorwasserstoff in Schritt c) abgetrennt werden.

9. Verfahren nach einem der Ansprüche 2 bis 8, **dadurch gekennzeichnet, dass** die Abkühlung gemäß Schritt b) in zwei oder mehr Stufen erfolgt und vor der Verflüssigung des Chlorwasserstoffs kondensierbare organische Nebenbestandteile, insbesondere Ortho-Dichlorbenzol oder Monochlorbenzol auskondensiert bzw. ausgefroren und vom HCl-Rohgasstrom abgetrennt werden.

10. Verfahren nach einem der Ansprüche 3 bis 9, **dadurch gekennzeichnet, dass** die Wärmeübertragung in Schritt b) in einem Rekuperator erfolgt.

11. Verfahren nach Anspruch 10, **dadurch gekennzeichnet, dass** die Wärmeübertragung in Schritt b) in einem ersten Rekuperator erfolgt, in dem gleichzeitig das gereinigte HCl-Gas überhitzt wird und sich daran ein zweiter Rekuperator anschließt, in dem die Verflüssigung des HCl-Rohgases gleichzeitig mit der Verdampfung des gereinigten HCl-Gases geschieht, gefolgt von einem Nachkondensator, in dem das nach Verflüssigung des HCl-Rohgases verbleibende Restgas weiter von HCl durch Kondensation befreit wird.

12. Verfahren zur Herstellung von Chlor aus einem Chlorwasserstoff und Kohlenmonoxid enthaltenden Rohgas, das die Schritte umfasst:
A) Abtrennung von Kohlenmonoxid enthaltenden Gasen, insbesondere Kohlenmonoxid enthaltendem Stickstoffgas aus einem mindestens Kohlenmonoxid und gegebenenfalls Stickstoff enthaltenden HCl-Rohgas nach dem Verfahren gemäß einem der Ansprüche 1 bis 11, und
B) Katalytische Oxidation des Chlorwasserstoffs in dem aus Schritt a) resultierenden Chlorwasserstoff enthaltenden Gas mit Sauerstoff unter Bildung von Chlor.

13. Verfahren nach Anspruch 12, **dadurch gekennzeichnet, dass** die Oxidation in Schritt B) mit reinem Sauerstoff, sauerstoffangereicherter Luft oder Luft betrieben wird.

14. Verfahren nach einem der Ansprüche 12 bis 13, **dadurch gekennzeichnet, dass** der Gehalt an Chlorwasserstoff in dem in den Schritt a) der Abtrennung A) eintretenden Chlorwasserstoff und Kohlenmonoxid enthaltenden HCl-Rohgas im Bereich von 20 bis 99,5 Vol.-% liegt.

15. Verfahren nach einem der Ansprüche 12 bis 14, **dadurch gekennzeichnet, dass** der Gehalt an Kohlenmonoxid in dem in Schritt a) der Abtrennung A) eintretenden Chlorwasserstoff und Kohlenmonoxid enthaltenden HCl-Rohgas im Bereich von 0,1 bis 15 Vol.-% liegt.

16. Verfahren nach einem der Ansprüche 12 bis 15, **dadurch gekennzeichnet, dass** der Gehalt an Kohlenmonoxid in der Abtrennung A) auf 1 Vol.-% und weniger, vorzugsweise auf weniger als 0,5 Vol.-%, noch bevorzugter auf weniger als 0,1 Vol.-% verringert wird.

17. Verfahren nach einem der Ansprüche 12 bis 16, **dadurch gekennzeichnet, dass** in Schritt B) mindestens ein gegebenenfalls geträgerter Katalysator verwendet wird, der mindestens ein Element aus der Gruppe enthält, die besteht aus: Ruthenium, Gold, Palladium, Platin, Osmium, Iridium, Silber, Kupfer, Kalium, Rhenium, Chrom.

18. Verfahren nach Anspruch 17, worin der Träger in Schritt B) aus der Gruppe ausgewählt wird, die besteht aus: Zinndioxid, Titandioxid, Aluminiumoxid, Siliziumoxid, Aluminium-Silizium Mischoxide, Zeolithe, Oxide und Mischoxide, Metallsulfate, Ton, bevorzugt Zinndioxid.

## Claims

1. Process for removing gases comprising carbon monoxide, especially nitrogen gas comprising carbon monoxide, from a crude HCl gas which comprises at least carbon monoxide with or without nitrogen and can be used in an HCl oxidation process, consisting at least of the process steps of:
a) compressing the crude HCl gas to an elevated pressure in a compression stage;
b) cooling the compressed crude HCl gas so as to liquefy hydrogen chloride, leaving the gas comprising carbon monoxide;
c) removing this gas comprising carbon monoxide from the liquefied hydrogen chloride;
d) evaporating and optionally superheating the liquid hydrogen chloride and providing it as purified HCl gas for the HCl oxidation process.

2. Process according to Claim 1, **characterized in that** the cooling in step b) is effected in two or more stages, preferably in two, three or four stages, more preferably in three stages.

3. Process according to Claim 1 or 2, **characterized in that** the heat required according to step d) to evaporate and optionally then superheat the liquid HCl is provided by the heat obtained in the cooling and at least partial liquefaction of the compressed crude HCl gas in step b).

4. Process according to Claim 3, **characterized in that** the cooling in step b) is effected in two or more stages, preferably in two, three or four stages, more preferably in three stages and **in that** the thermal energy obtainable in step b) is withdrawn from the first and/or second stages of the cooling in step b).

5. Process according to any one of Claims 1 to 4, **characterized in that** the compression a) is performed at a pressure of up to 30 bar (30 000 hPa), preferably of up to 20 bar (20 000 hPa), more preferably of up to 15 bar (15 000 hPa).

6. Process according to any one of Claims 1 to 5, **characterized in that** the cooling in step b) is performed down to a temperature of -80°C and higher, preferably of -70°C and higher, more preferably of -60°C and higher.

7. Process according to any one of Claims 1 to 6, **characterized in that** the evaporation in step d) is performed at a temperature of -45°C and higher, preferably of -20°C and higher, more preferably of -10°C and higher.

8. Process according to any one of Claims 1 to 7, **characterized in that** the crude HCl gas stream in step a) comprises nitrogen and/or other inert gases and/or other gases which are uncondensable under the process conditions, and these are removed from the liquefied hydrogen chloride in step c) with the removal of this gas comprising carbon monoxide.

9. Process according to any one of Claims 2 to 8, **characterized in that** the cooling in step b) is effected in two or more stages and, before the liquefaction of the hydrogen chloride, condensable organic secondary constituents, especially orthodichlorobenzene or monochlorobenzene, are condensed or frozen out and removed from the crude HCl gas stream.

10. Process according to any one of Claims 3 to 9, **characterized in that** the heat transfer in step b) is effected in a recuperator.

11. Process according to Claim 10, **characterized in that** the heat transfer in step b) is effected in a first recuperator in which the purified HCl gas is simultaneously superheated, and which is followed downstream by a second recuperator in which the crude HCl gas is liquefied simultaneously with the evaporation of the purified HCl gas, followed by a postcondenser in which the residual gas remaining after liquefaction of the crude HCl gas is freed of further HCl by condensation.

12. Process for preparing chlorine from a crude gas comprising hydrogen chloride and carbon monoxide, which comprises the steps of:
A) removing gases comprising carbon monoxide, especially nitrogen gas comprising carbon monoxide, from a crude HCl gas comprising at least carbon monoxide with or without nitrogen by the process according to any one of Claims 1 to 11, and
B) catalytically oxidizing the hydrogen chloride in the gas which comprises hydrogen chloride and results from step a) with oxygen to form chlorine.

13. Process according to Claim 12, **characterized in that** the oxidation in step B) is conducted with pure oxygen, oxygen-enriched air or air.

14. Process according to either of Claims 12 and 13, **characterized in that** the hydrogen chloride content in the crude HCl gas which comprises hydrogen chloride and carbon monoxide and enters step a) of the removal A) is in the range from 20 to 99.5% by volume.

15. Process according to any one of Claims 12 to 14, **characterized in that** the carbon monoxide content in the crude HCl gas which comprises hydrogen chloride and carbon monoxide and enters step a) of the removal A) is in the range from 0.1 to 15% by volume.

16. Process according to any one of Claims 12 to 15, **characterized in that** the carbon monoxide content in the removal A) is reduced to 1% by volume and less, preferably to less than 0.5% by volume, even more preferably to less than 0.1% by volume.

17. Process according to any one of Claims 12 to 16, **characterized in that**, in step B), at least one optionally supported catalyst is used, which comprises at least one element from the group consisting of: ruthenium, gold, palladium, platinum, osmium, iridium, silver, copper, potassium, rhenium, chromium.

18. Process according to Claim 17, in which the support in step B) is selected from the group consisting of: tin dioxide, titanium dioxide, aluminium oxide, silicon oxide, aluminium-silicon mixed oxides, zeolites, oxides and mixed oxides, metal sulphates, clay, preferably tin dioxide.

## Revendications

1. Procédé de séparation de gaz contenant du monoxyde de carbone, notamment d'un gaz azoté contenant du monoxyde de carbone, à partir d'un HCl gazeux brut contenant au moins du monoxyde de carbone et éventuellement de l'azote, qui est utilisable dans un procédé d'oxydation d'HCl, constitué par au moins les étapes de procédé suivantes :
a) la compression de l'HCl gazeux brut dans une étape de compression à une pression élevée ;
b) le refroidissement de l'HCl gazeux brut comprimé, de manière à ce que le chlorure d'hydrogène se liquéfie et que le gaz contenant du monoxyde de carbone demeure ;
c) la séparation de ce gaz contenant du monoxyde de carbone du chlorure d'hydrogène liquéfié ;
d) l'évaporation et éventuellement le surchauffage du chlorure d'hydrogène liquide et sa préparation sous la forme d'HCl gazeux purifié pour le procédé d'oxydation d'HCl.

2. Procédé selon la revendication 1, **caractérisé en ce que** le refroidissement selon l'étape b) a lieu en deux étapes ou plus, de préférence en deux, trois ou quatre étapes, de manière particulièrement préférée en trois étapes.

3. Procédé selon la revendication 1 ou 2, **caractérisé en ce que** la chaleur nécessaire selon l'étape d) pour l'évaporation et éventuellement le surchauffage ultérieur de l'HCl liquide est fournie par la chaleur obtenu lors du refroidissement et de la liquéfaction au moins partielle de l'HCl gazeux brut comprimé selon l'étape b).

4. Procédé selon la revendication 3, **caractérisé en ce que** le refroidissement selon l'étape b) a lieu en deux étapes ou plus, de préférence en deux, trois ou quatre étapes, de manière particulièrement préférée en trois étapes, et **en ce que** l'énergie thermique pouvant être obtenue selon l'étape b) est extraite de la première et/ou de la seconde étape du refroidissement selon l'étape b).

5. Procédé selon l'une quelconque des revendications 1 à 4, **caractérisé en ce que** la compression a) est réalisée à une pression de jusqu'à 30 bar (30 000 hPa), de préférence de jusqu'à 20 bar (20 000 hPa), de manière particulièrement préférée de jusqu'à 15 bar (15 000 hPa).

6. Procédé selon l'une quelconque des revendications 1 à 5, **caractérisé en ce que** le refroidissement selon l'étape b) est réalisé jusqu'à une température de -80 °C et plus, de préférence de
- 70 °C et plus, de manière particulièrement préférée de -60 °C et plus.

7. Procédé selon l'une quelconque des revendications 1 à 6, **caractérisé en ce que** l'évaporation selon l'étape d) est réalisée à une température de -45 °C et plus, de préférence de -20 °C et plus, de manière particulièrement préférée de -10 °C et plus.

8. Procédé selon l'une quelconque des revendications 1 à 7, **caractérisé en ce que** le courant d'HCl gazeux brut à l'étape a) contient de l'azote et/ou d'autres gaz inertes et/ou d'autres gaz non condensables dans les conditions du procédé, et ceux-ci sont séparés avec la séparation de ce gaz contenant du monoxyde de carbone du chlorure d'hydrogène liquéfié à l'étape c).

9. Procédé selon l'une quelconque des revendications 2 à 8, **caractérisé en ce que** le refroidissement selon l'étape b) a lieu en deux étapes ou plus, et les constituants secondaires organiques condensables, notamment l'ortho-dichlorobenzène ou le monochlorobenzène, sont condensés ou congelés et séparés du courant d'HCl gazeux brut avant la liquéfaction du chlorure d'hydrogène.

10. Procédé selon l'une quelconque des revendications 3 à 9, **caractérisé en ce que** le transfert de chaleur à l'étape b) a lieu dans un récupérateur.

11. Procédé selon la revendication 10, **caractérisé en ce que** le transfert de chaleur à l'étape b) a lieu dans un premier récupérateur, dans lequel l'HCl gazeux purifié est simultanément surchauffé et qui est suivi par un second récupérateur, dans lequel la liquéfaction de l'HCl gazeux brut a lieu simultanément avec l'évaporation de l'HCl gazeux purifié, suivi par un post-condensateur, dans lequel le gaz résiduel restant après la liquéfaction de l'HCl gazeux brut est davantage débarrassé de l'HCl par condensation.

12. Procédé de fabrication de chlore à partir d'un gaz brut contenant du chlorure d'hydrogène et du monoxyde de carbone, qui comprend les étapes suivantes :
A) la séparation de gaz contenant du monoxyde de carbone, notamment d'un gaz azoté contenant du monoxyde de carbone, à partir d'un HCl gazeux brut contenant au moins du monoxyde de carbone et éventuellement de l'azote par le procédé selon l'une quelconque des revendications 1 à 11, et
B) l'oxydation catalytique du chlorure d'hydrogène dans le gaz contenant du chlorure d'hydrogène résultant de l'étape a) avec de l'oxygène pour former du chlore.

13. Procédé selon la revendication 12, **caractérisé en ce que** l'oxydation à l'étape B) est réalisée avec de l'oxygène pur, de l'air enrichi en oxygène ou de l'air.

14. Procédé selon l'une quelconque des revendications 12 à 13, **caractérisé en ce que** la teneur en chlorure d'hydrogène de l'HCl gazeux brut contenant du chlorure d'hydrogène et du monoxyde de carbone produit lors de l'étape a) de la séparation A) est dans la plage allant de 20 à 99,5 % en volume.

15. Procédé selon l'une quelconque des revendications 12 à 14, **caractérisé en ce que** la teneur en monoxyde de carbone de l'HCl gazeux brut contenant du chlorure d'hydrogène et du monoxyde de carbone produit lors de l'étape a) de la séparation A) est dans la plage allant de 0,1 à 15 % en volume.

16. Procédé selon l'une quelconque des revendications 12 à 15, **caractérisé en ce que** la teneur en monoxyde de carbone est réduite à 1 % en volume et moins, de préférence à moins de 0,5 % en volume, de manière encore davantage préférée à moins de 0,1 % en volume, lors de la séparation A).

17. Procédé selon l'une quelconque des revendications 12 à 16, **caractérisé en ce qu'**à l'étape B), au moins un catalyseur éventuellement supporté est utilisé, qui contient au moins un élément du groupe constitué par : le ruthénium, l'or, le palladium, le platine, l'osmium, l'iridium, l'argent, le cuivre, le potassium, le rhénium, le chrome.

18. Procédé selon la revendication 17, **caractérisé en ce que** le support à l'étape B) est choisi dans le groupe constitué par : le dioxyde d'étain, le dioxyde de titane, l'oxyde d'aluminium, l'oxyde de silicium, les oxydes mixtes d'aluminium-silicium, les zéolithes, les oxydes et les oxydes mixtes, les sulfates de métaux, l'argile, de préférence le dioxyde d'étain.
